# DEMANDE DE BREVET EUROPEEN

(11) **EP 0 606 789 A1**
(43) Date de publication de la demande: **20.07.1994**
(21) Numéro de dépôt: 93402951.3
(22) Date de dépôt: 07.12.1993
(51) Int. Cl.: F24D 3/14

(54) **Materiau d'isolation pour l'installation de tubes de circulation d'un fluide d'échange thermique**

(30) Priorité: 11.01.1993 FR 9300160
(71) Demandeur: ISOBOX TECHNOLOGIES, F-92012 Nanterre Cédex (FR)
(72) Inventeur: Barbarit, André, F-94120 Fontenmay-Sous-Bois (FR)
(74) Mandataire: Orès, Bernard

(57) **Abrégé**

Matériau d'isolation à base de polystyrène expansé pour l'installation de tubes de circulation d'un fluide d'échange thermique et qui comporte sur une de ses faces des plots (p) pour le support, le guidage et le blocage desdits tubes.

Il est moulé suivant une bande (B) dont la face portant les plots (p) est conformée de manière telle qu'elle peut être enroulée sur elle-même pour constituer un "rouleau" ou "bobine" (15) propre à être ensuite dévidé suivant un lé continu de relativement grande longueur lors de la pose sur un chantier.

## Description

L'invention a pour objet un matériau d'isolation pour l'installation de tubes de circulation d'un fluide d'échange thermique.

Elle vise, notamment, un tel matériau pour systèmes de chauffage et/ou de rafraichissement intégrés dans lesquels des tubes en matière plastique servent à la circulation d'un fluide de chauffage ou de refroidissement d'une surface qui peut être, par exemple, le plancher d'un immeuble à usage d'habitation ou de bureaux, ou celui d'un bâtiment public mais aussi, le sol en plein air d'une aire ou zone que l'on souhaite chauffer, le plus souvent pour s'opposer à la formation de verglas, étant entendu que le matériau de l'invention n'est pas limité à de telles utilisations mais trouve application, également, dans tout domaine où se posent des problèmes semblables à ceux du chauffage et/ou du rafraichissement à l'aide d'un fluide d'échange thermique, par exemple dans les dispositifs du type capteurs solaires ou analogues.

On connaît déjà, par FR-A-2 577 961, un matériau d'isolation pour la pose de tubes en matière plastique dans des installations de chauffage de planchers sous forme de plaques ou dalles de polystyrène expansé présentant, sur une de leurs faces, des plots moulés dans la masse pour le support, le guidage et le blocage des tubes, les rives des dalles étant munies de tenons et mortaises pour l'assemblage de dalles adjacentes. Ces dernières ont des dimensions appropriées pour que la manutention sur un chantier s'effectue simplement ; cependant, le temps de pose de ces dalles est relativement long si l'on veut réaliser avec soin l'assemblage des dalles entre elles, comme cela doit d'ailleurs être fait pour éviter tous risques de ponts thermiques. Il en résulte, par conséquent, et en particulier pour des chantiers importants, un inconvénient qu'il n'a pas été possible de pallier, à ce jour.

C'est, précisément, un but général de l'invention de fournir un matériau du type de ceux mentionnés ci-dessus qui permette, toutefois, de considérablement réduire le temps de pose par rapport à celui exigé pour les matériaux connus.

Ce problème est résolu, selon l'invention, par le fait que le matériau d'isolation à base de polystyrène expansé pour l'installation de tubes de circulation d'un fluide d'échange thermique, et qui comporte sur une de ses faces des plots pour le support, le guidage et le blocage desdits tubes est moulé suivant une bande dont la face portant les plots est conformée de manière telle qu'elle peut être enroulée sur elle-même pour constituer un "rouleau" ou "bobine" propre à être ensuite dévidé suivant un lé continu de relativement grande longueur lors de la pose sur un chantier.

Dans une réalisation préférée la bande est munie, sur sa face qui porte les plots, de gorges ou rainures non traversantes qui limitent l'épaisseur de ladite bande à une valeur de l'ordre de quelques millimètres à l'aplomb desdites gorges ou rainures.

Selon une autre caractéristique de l'invention, l'épaisseur de la bande, -à l'exception des endroits où règnent les plots-, est relativement faible, de l'ordre d'une dizaine de millimètres.

Selon encore une autre caractéristique de l'invention, les gorges ou rainures ménagées dans la bande règnent d'un bord longitudinal à l'autre de ladite bande et sont à deux sections droites différentes pour permettre, lors de la mise en forme de la bande en "rouleau" ou "bobine", de prendre en compte la répartition et le positionnement des plots les uns par rapport aux autres.

L'invention prévoit aussi que la bande moulée en polystyrène expansé puisse être garnie, sur sa face opposée à celle portant les plots, d'une sous-couche en un matériau à bonnes propriétés d'isolation thermique et/ou phonique, et/ou de résistance à l'humidité, ou au feu, etc..., de préférence sous forme d'une feuille de feutre, un mat de fibres, un tissu de mousse, etc..., rendu solidaire de la bande par tous moyens appropriés.

Dans une exécution préférée du matériau selon l'invention, celui-ci est fabriqué suivant une bande d'une longueur d'une dizaine de mètres, d'une largeur d'environ un mètre, l'épaisseur de la bande en dehors des zones où règnent les plots étant de l'ordre de dix millimètres, la profondeur des gorges ou rainures de l'ordre de six millimètres et la hauteur des plots d'environ 25 millimètres, de sorte que la bande peut être enroulée suivant une "bobine" ou "rouleau" d'un diamètre d'environ 0,65 m.

D'autres caractéristiques et avantages de l'invention apparaîtront de la description qui suit, faite à titre d'exemple et en référence au dessin annexé, dans lequel :
- la figure 1 est une vue schématique en plan d'une installation de tubes de circulation d'un fluide d'échange thermique ;
- la figure 2 est une vue partielle, à plus grande échelle, d'une partie de la figure 1 ;
- la figure 3 est une vue schématique, en perspective, montrant une installation de chauffage et/ou de rafraichissement incorporée à un plancher de bâtiment et mettant en oeuvre un matériau selon l'invention ;
- la figure 4 est une vue de "rouleaux" de matériau selon l'invention dont l'un est posé et l'autre est en cours de pose ;
- la figure 5 est une vue en coupe longitudinale d'une bande de matériau selon l'invention ;
- la figure 6 est une vue à plus grande échelle d'une partie de la figure 5 mais dans la condition "enroulée" dudit matériau.

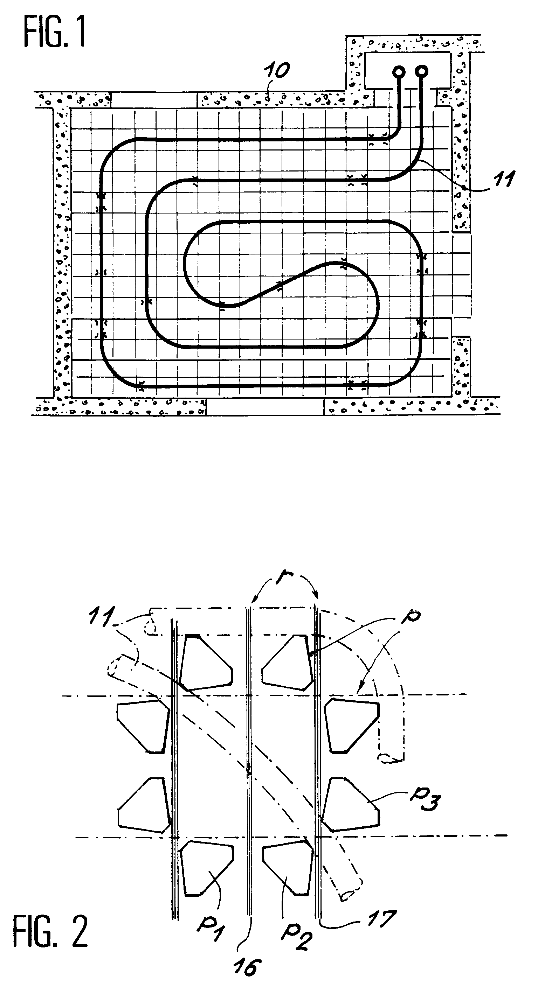

On se réfère d'abord à la figure 1 qui montre la disposition de tubes 11 pour la circulation d'un fluide d'échange thermique sur le sol 10 d'un immeuble d'habitation ou de bureaux ou d'usine, ou d'un bâtiment recevant le public, étant entendu, comme indiqué ci-dessus, que le sol 10 peut également être celui d'une surface en plein air, par exemple une piste d'aterrissage d'avions ou d'hélicoptères que l'on souhaite pouvoir protéger du verglas ou encore une surface de capteur de rayonnement solaire, etc..., qui doit être isolée de son support. Dans ce qui suit, la surface à laquelle s'applique le matériau selon l'invention sera décrite comme étant celle d'un plancher d'immeuble, P, et cela pour faciliter l'exposé mais sans qu'aucun caractère limitatif ne soit, bien entendu, attaché à cet exemple.

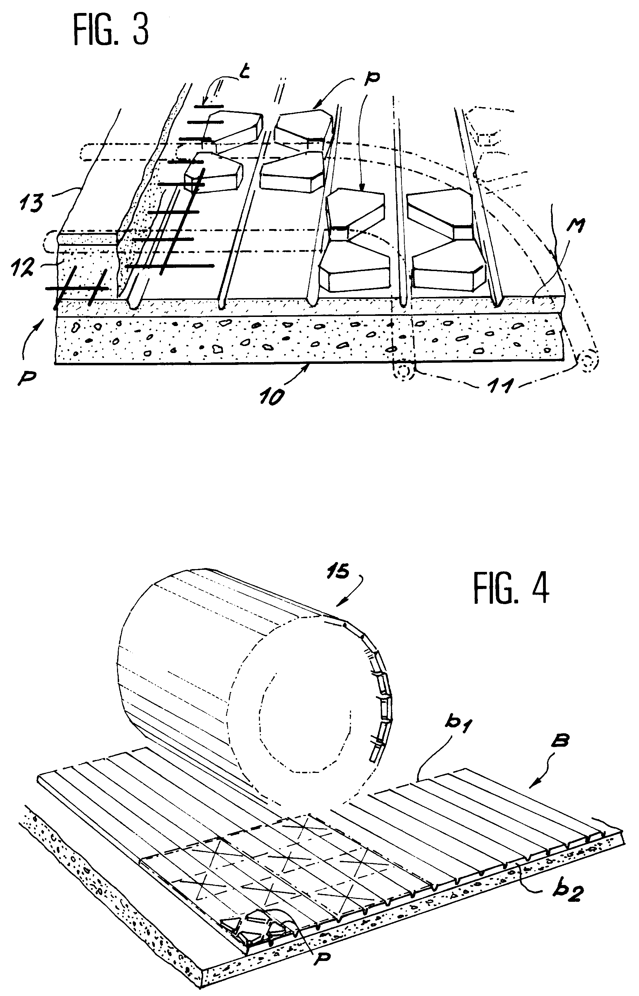

Comme illustré sur la figure 3, le plancher P comprend :
. une dalle de béton 10 ;
. un matériau d'isolation M en polystyrène expansé présentant sur sa face distante de celle au contact de la dalle 10 des plots p de support, guidage et blocage des tubes 11 disposés suivant un dessin prédéterminé et dans lesquels peut circuler un fluide pour chauffer ou refroidir le plancher P ;
. un treillis anti-retrait t fixé sur la face supérieure des plots p ;
. une dalle de béton 12 ; et
. un revêtement de sol 13 qui peut être une moquette, du parquet, un carrelage, etc...

Alors que dans les réalisations connues le matériau d'isolation est constitué de plaques d'environ 0,60 x 1,00 m assemblées entre elles par leurs rives, le matériau d'isolation selon l'invention, M, est moulé suivant une bande, B, dont la face portant les plots p est conformée de manière telle que le matériau pour l'installation des tubes 11 peut être livré sur un chantier en "rouleau", ou en "bobine", 15, c'est-à-dire selon un volume de forme générale cylindrique obtenu par enroulement de la bande B sur elle-même suivant des spires adjacentes, figure 4.

Pour ce faire, l'invention propose que le polystyrène expansé constitutif de la bande B soit moulé sur sa face portant les plots, -mais en dehors des zones sur lesquelles sont érigés ces derniers-, de manière que règnent sur ladite face des gorges ou rainures non traversantes, r, qui permettent, de façon surprenante, d'obtenir une bande B de polystyrène expansé pouvant être "enroulée" sur elle-même sans que cette bande ne se brise lors de sa mise en "rouleau" ou "bobine" ni lors de son dévidage lors de sa pose sur un chantier.

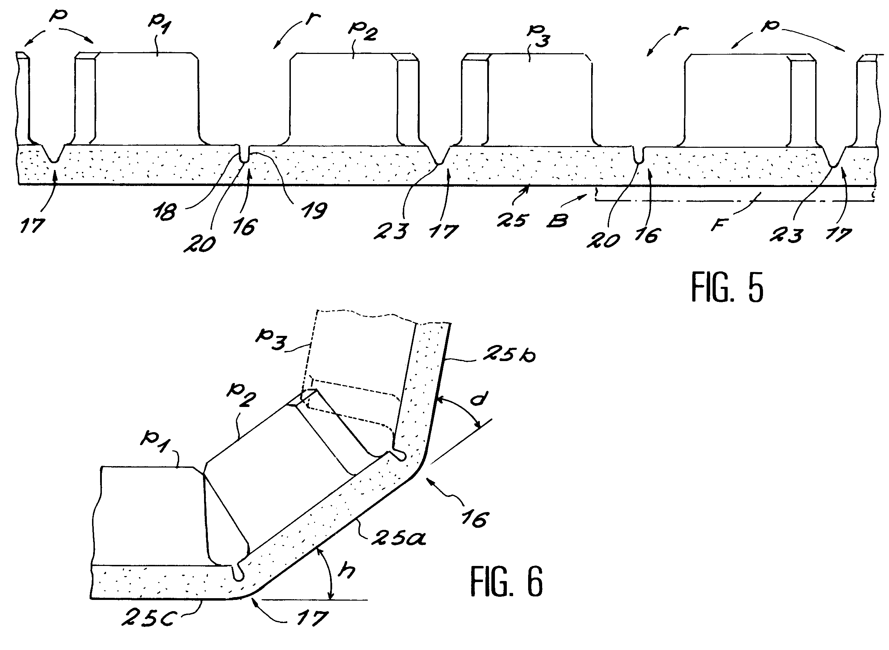

L'invention propose également que le polystyrène expansé constitutif de la bande B soit moulé, comme illustré sur les figures 4 et 5, à une épaisseur relativement faible, de l'ordre d'une dizaine de millimètres dans ses zones ne comportant pas de plots p, et cela contrairement aux dalles usuelles dont l'épaisseur est de l'ordre de 30 mm .

Comme bien montré sur la figure 5, les gorges ou rainures non traversantes r qui règnent entre les deux bords longitudinaux b₁ et b₂ de la bande B sont de deux types différents, à section droite en U pour les gorges 16 et à section droite en V pour les gorges 17, et cela pour tenir compte de la disposition des plots p suivant une répartition en couronnes contigües qui s'est révélée être particulièrement bien appropriée pour la pose des tubes 11, notamment dans les systèmes de chauffage intégrés à eau à basse température. Les gorges ou rainures 16 sont ainsi limitées par deux faces sensiblement parallèles 18 et 19 peu distantes l'une de l'autre et réunies par un fond arrondi 20, tandis que les gorges ou rainures 17 sont limitées par des faces 21 et 22 qui convergent vers un fond arrondi 23. Conformément à l'invention, également, les fonds comme 20 et 23 des gorges ou rainures r sont à faible distance de la face 25 de la bande B opposée à celle portant les plots p, la distance de ces fonds de gorges ou rainures à ladite face 25 étant, par exemple, de l'ordre de 4 mm pour une épaisseur de la bande B, -en dehors de la zone des plots-, de l'ordre de 10 mm.

La disposition alternée des gorges ou rainures 16 et 17 permet d'enrouler la bande B de manière que des plots comme p₁ et p₂, de part et d'autre d'une gorge 16, puissent venir au contact l'un de l'autre, figure 6, tandis que des plots comme p₂ et p₃, de part et d'autre d'une gorge 17, peuvent être en partie alignés les uns derrière les autres, avec pour conséquence que dans la condition "enroulée" de la bande, l'angle d entre la surface 25a au-dessous d'un plot p₂ et la surface 25b au-dessous d'un plot p₃ est supérieur à l'angle h entre les surfaces 25a et 25c, cette dernière règnant au-dessous d'un plot p₁. Ainsi, et pour une forme de réalisation ayant donné de bons résultats, une bande B de polystyrène expansé d'une épaisseur moyenne de 10 mm, d'une épaisseur au fond des gorges 16 et 17 de 4 mm et présentant des plots de 25 mm de hauteur a pu être enroulée sans qu'elle ne se brise avec des angles h d'une valeur d'environ 35°, des angles d d'environ 45° et plus, le "rouleau" ou "bobine" 15 en ce matériau ayant un diamètre d'environ 0,65 m pour une longueur de bande déroulée de 10 m et une largeur entre les bords b₁ et b₂ d'environ 1,20 m.

L'invention n'est pas limitée à la forme de réalisation qui vient d'être décrite. Il entre également dans son cadre des réalisations dans lesquelles la bande B de polystyrène expansé est revêtue sur sa face 25 d'une sous-couche F, figure 5, en un matériau choisi pour accroître les propriétés d'isolation du polystyrène expansé ou apporter audit matériau des caractéristiques supplémentaires d'étanchéité ou de résistance au feu, ou autre, comme par exemple une feuille de feutre, un film de matière plastique, un tissu de mousse, un mat de fibres, etc... rendu solidaire de la bande B par tous moyens appropriés.

## Revendications

1. Matériau d'isolation à base de polystyrène expansé pour l'installation de tubes de circulation d'un fluide d'échange thermique et qui comporte sur une de ses faces des plots (p) pour le support, le guidage et le blocage desdits tubes (11), caractérisé en ce qu'il est moulé suivant une bande (B) dont la face portant les plots (p) est conformée de manière telle qu'elle peut être enroulée sur elle-même pour constituer un "rouleau" ou "bobine" (15) propre à être ensuite dévidé suivant un lé continu de relativement grande longueur lors de la pose sur un chantier.

2. Matériau selon la revendication 1, caractérisé en ce que la bande (B) est munie sur sa face qui porte les plots (p) de gorges ou rainures non traversantes (r) qui limitent l'épaisseur de ladite bande, au droit desdites gorges, à une valeur de l'ordre de quelques millimètres.

3. Matériau selon la revendication 1 ou la revendication 2, caractérisé en ce que l'épaisseur de la bande (B), -à l'exception des endroits où règnent les plots (p)-, est relativement faible, de l'ordre d'une dizaine de millimètres.

4. Matériau selon la revendication 2, caractérisé en ce que les gorges ou rainures (r) ménagées dans la bande (B) règnent d'un bord longitudinal (b₁) à l'autre (b₂) de ladite bande (B) et sont à deux sections droites différentes pour permettre, lors de la mise en forme de la bande en "rouleau" ou "bobine" (15), de prendre en compte la répartition et le positionnement des plots (p) les uns par rapport aux autres.

5. Matériau selon l'une quelconque des revendications précédentes, caractérisé en ce que la bande moulée en polystyrène expansé (B) est en outre garnie d'une sous-couche (F) en un matériau à bonnes propriétés d'isolation thermique et/ou phonique et/ou de résistance à l'humidité, ou au feu, etc..., de préférence sous forme d'une feuille de feutre, un mat de fibres, un tissu de mousse, etc..., rendu solidaire de la bande (B) par tous moyens appropriés.

6. Matériau selon l'une quelconque des revendications précédentes, caractérisé en ce qu'il est fabriqué suivant une bande (B) d'une longueur d'une dizaine de mètres, d'une largeur d'environ un mètre, l'épaisseur de la bande (B) en dehors des zones où règnent les plots (p) étant de l'ordre de 10 millimètres, la profondeur des gorges ou rainures (r) de l'ordre de 6 millimètres et la hauteur des plots (p) d'environ 25 millimètres, de sorte que la bande peut être enroulée suivant une "bobine" ou un "rouleau" (15) d'un diamètre d'environ 0,65 m.
